# FASCICULE DE BREVET EUROPEEN

(11) **EP 3 864 642 B1**
(45) Date de publication et mention de la délivrance du brevet: **06.12.2023**
(21) Numéro de dépôt: 19813619.4
(22) Date de dépôt: 11.10.2019
(51) Int. Cl.: A61C 13/08, G09B 23/28

(54) **PROCÉDÉ ET SYSTEME POUR FABRIQUER DES RÉPLIQUES DE DENT AVEC SON SYSTÈME CANALAIRE**
VERFAHREN UND SYSTEM ZUR HERSTELLUNG VON ZAHNNACHBILDUNGEN MIT DEM ENTSPRECHENDEN WURZELKANALSYSTEM
METHOD AND SYSTEM FOR MANUFACTURING REPLICA TEETH WITH THE CORRESPONDING ROOT CANAL SYSTEM

(30) Priorité: 11.10.2018 FR 1859412
(43) Date de publication de la demande: 18.08.2021
(73) Titulaire: Naodent Evolution, 44300 Nantes (FR)
(72) Inventeur: BABIN, Thierry, 44300 NANTES (FR); ROGER, Jean-Baptiste, 76000 ROUEN (FR)
(74) Mandataire: IP Trust
(86) Numéro de dépôt international: PCT/FR2019/052421
(87) Numéro de publication internationale: WO 2020/074842

(56) Documents cités:
- WO-A1-2012/156287
- CN-A- 106 923 920
- GB-A- 2 162 068
- US-A- 5 294 380

## Description

### Domaine technique

La présente invention concerne un procédé pour fabriquer des répliques de dent avec son système canalaire. Elle vise également un système de fabrication de répliques de dent mettant en oeuvre ce procédé.

Le domaine de l'invention est plus particulièrement de la formation et de l'éducation professionnelle, initiale et continue, pour des métiers dentaires et endodontiques.

### Etat de la technique antérieure

En chirurgie dentaire le traitement endodontique d'une dent (dévitalisation ou traitement canalaire) est un acte courant au sein d'un cabinet.

Cet acte consiste à nettoyer, mettre en forme et obturer un ou plusieurs canaux d'une racine dans lequel passe le système vasculo-nerveux de ladite dent. Ce réseau canalaire est complexe de par sa forme et varie en fonction de nombreux critères comme le type de dents (une même dent peut présenter une variabilité importante de son système canalaire), son historique pathologique, l'âge du patient.

Pour s'exercer à cet acte courant, les praticiens (étudiants en chirurgie dentaire ou praticiens qui veulent se perfectionner) travaillent sur des dents humaines extraites. Ceci pose différents problèmes, à savoir le risque très important de contamination croisées et une inégalité manifeste entre chaque praticien (provenant de l'historique de la dent même). L'enseignement d'un protocole standardisé qui est de règle dans cette discipline est donc impossible.

Il est de plus de plus en plus difficile de se procurer des dents extraites et la législation régule de façon stricte leur utilisation. Des différences importantes existent sur une même dent. Un étudiant peut donc commencer sur une dent présentant une anatomie canalaire complexe à la différence d'un autre qui pour la même dent aura une anatomie canalaire simple. Le premier considérera le traitement endodontique très difficile alors que le second au contraire facile, ce qui n'est le cas dans aucune des deux situations. Le problème réside dans le fait que la dent sur laquelle ils s'exercent ne correspond pas à leur niveau d'apprentissage.

Il existe maintenant depuis quelques années des offres commerciales de répliques de dent ou dents artificielles. Les plus récentes de ces offres font appel à des procédés d'impression 3D et proposent un choix possible parmi une pluralité de répliques de dents saines ou dégradées. Ces procédés d'impression 3D de répliques de dent mettent par exemple en oeuvre de la stéréolithographie, notamment en utilisant du sulfate de baryum.

La société Endo Reality Ltd (www.endoreality.co.uk) propose ainsi un procédé de fabrication de répliques de dents par impression 3D.

Le document EP1912194 (Nissin) divulgue un procédé de fabrication d'une réplique de dent multicouches destiné à l'éducation dentaire.

Le document WO2012/156287 A1 divulgue un dispositif de simulation de traitement endodontique, comprenant au moins un modèle de dent physique comprenant une chambre pulpaire et des canaux radiculaires, fabriqué au moyen de techniques de fabrication par couches ou de prototypage rapide et correspondant à un cas endodontique réel.

Le document US5,294,380 A divulgue un procédé de fabrication d'une prothèse dentaire qui comprend une étape pour chauffer un ballon après inclusion d'une prothèse en cire, suivie d'une étape d'élimination de la cire à une température permettant de polymériser une résine thermodurcissable.

Il apparait toutefois que les offres connues à ce jour, même si elles proposent des répliques réalistes de dents dans leur forme extérieure, dans leur texture ou leur couleur, ne procurent pas un niveau de réalisme suffisant pour simuler correctement l'insertion d'instruments canalaires à l'intérieur de canaux dentaires réellement représentatifs de canaux naturels. En particulier, les répliques réalisées avec les procédés de réalisation de réplique de l'art antérieur, notamment celui divulgué dans le document WO2012/156287 A1 précité, comportent par conception un canal reliant les canaux dentaires à une ouverture non réaliste ménagée dans la partie supérieure de la dent.

Un premier but de la présente invention est de créer une dent artificielle ou réplique de dent avec son système canalaire physico-réaliste représentant des situations cliniques différentes. Une même dent dont l'anatomie extérieure semble la même pourra présenter un système canalaire différent.

Un second but de la présente invention est de fournir une bibliothèque de dents avec des systèmes canalaires variés, afin que les praticiens puissent appréhender durant leur cursus universitaire ou en formation continue un maximum de situations cliniques, ce qui devrait contribuer à réduire le risque d'accidents.

L'objectif est que chaque étudiant s'exerce sur le maximum de situations cliniques qu'il pourra rencontrer et non plus découvrir la situation la première fois devant le patient comme c'est le cas aujourd'hui.

### Exposé de l'invention

Cet objectif est atteint avec un procédé pour fabriquer une réplique d'une dent, tel que défini dans la revendication indépendante 1 et un système pour fabriquer une réplique d'une dent tel que défini dans la revendication indépendante 10.

Ledit procédé pour fabriquer une réplique d'une dent comprenant une impression 3D de la réplique à partir d'un modèle numérique 3D de ladite dent, qui est issu de données numériques d'imagerie de ladite dent, un traitement desdites données numériques de façon à obtenir une modélisation numérique physico-réaliste d'un ou plusieurs canaux radiculaires présents dans ladite dent, de sorte que la réplique de ladite dent obtenue par ladite impression 3D inclut un ou plusieurs canaux radiculaires biomimétiques.

Suivant l'invention, la modélisation numérique physico-réaliste inclut une modélisation d'une constriction apicale et/ou d'un foramen apical d'un canal réel en ouverture d'un apex de la dent, ledit ou lesdits canaux radiculaires biomimétiques ainsi obtenus comportant chacun un unique débouché extérieur via une réplique dudit ou desdits foramens apicaux.

Ainsi, avec l'invention, les étudiants en chirurgie dentaire et en endodontie, en formation initiale, ainsi que les praticiens en formation continue, ont désormais à leur disposition des répliques de dent vraiment physico-réalistes et biomimétiques, notamment parce que les canaux radiculaires présents dans ces répliques selon l'invention n'ont aucun débouché de construction sur la partie supérieure et ne sont accessibles qu'au moyen d'instruments canalaires après fraisage de la partie supérieure de la réplique de dent.

Dans le cas où l'impression 3D utilise une résine et une cire support adaptées pour constituer la réplique de dent, le procédé de fabrication selon l'invention comprend en outre, à l'issue de l'impression 3D de la réplique de dent, une phase d'élimination de la cire dans ladite réplique de dent.

La phase d'élimination peut avantageusement comprendre l'une et/ou l'autre des étapes suivantes :
- une étape de passage de la réplique de dent dans une étuve à une température prédéterminée pendant une durée prédéterminée,
- une étape de passage de la réplique de dent dans un bac à ultrasons à une température prédéterminée pendant une durée prédéterminée, ce bac à ultrasons contenant de préférence de l'huile de maïs,
- une étape pour placer la réplique de dent dans une centrifugeuse dans des conditions de température, vitesse de rotation et durée prédéterminées, de façon à extraire la cire hors du ou des canaux radiculaires biomimétiques via le ou les répliques des foramen apicaux.
- une étape pour placer la réplique de dent dans un autoclave pendant une durée prédéterminée,
- une étape pour appliquer sur la surface de la réplique de dent un agent décireur.

Le procédé de fabrication selon l'invention peut aussi avantageusement comprendre, à l'issue de la phase d'élimination de la cire, une étape pour injecter de l'huile à partir d'une ouverture d'un apex de la réplique de dent.

Suivant un autre aspect de l'invention, il est proposé un système pour fabriquer une réplique d'une dent, comprenant des moyens de tomographique pour numériser une dent réelle, des moyens pour générer une modélisation 3D de ladite dent numérisée, et des moyens d'impression 3D de ladite réplique mettant en oeuvre une résine et une cire support de ladite réplique, des moyens pour traiter lesdites données numériques de façon à obtenir une modélisation numérique physico-réaliste de canaux dentaires présents dans ladite dent, de sorte que ladite réplique de dent issue de l'impression 3D inclut des canaux radiculaires biomimétiques, ce système mettant en oeuvre le procédé selon l'invention.

Selon l'invention, les moyens de traitement numérique sont agencés pour modéliser une constriction apicale d'un canal réel et/ou un foramen apical d'un canal radiculaire en ouverture d'un apex de la dent, ledit ou lesdits canaux radiculaires biomimétiques comportant chacun un unique débouché extérieur via une réplique dudit ou desdits foramens apicaux.

Le système de fabrication selon l'invention peut en outre avantageusement comprendre des moyens pour éliminer la cire support de la réplique de dent.

Ces moyens d'élimination peuvent comprendre une étuve, un bac à ultrasons, une centrifugeuse, un autoclave agencé pour traiter des répliques de dent sous sachets.

### Description des figures

D'autres avantages et particularités de l'invention apparaîtront à la lecture de la description détaillée de mises en oeuvre et de modes de réalisation nullement limitatifs, et des dessins annexés suivants :
- la figure 1 est une vue radiographique d'une réplique de dent obtenue par le procédé de fabrication selon l'invention,
- la figure 2 est une vue agrandie de la figure 1, illustrant plus particulièrement le biomimétisme d'un canal radiculaire,
- la figure 3 est un schéma synoptique d'un exemple de réalisation d'un procédé de fabrication selon l'invention, et
- la figure 4 est une vue radiographique complète d'une réplique de dent selon l'invention, illustrant la structure des canaux radiculaires biomimétiques.

### Modes de réalisation détaillés

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

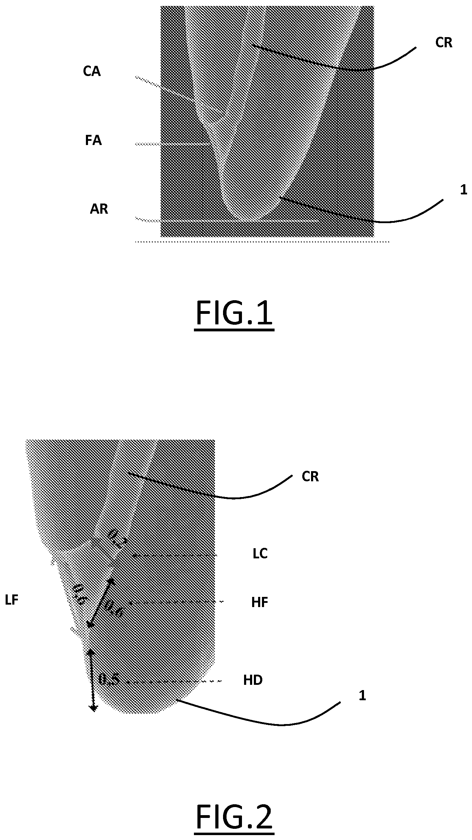

En référence à la figure 1, la réplique de dent 1 une dent réelle a fait l'objet d'un traitement numérique visant à obtenir une morphologie d'un canal radiculaire CR qui soit aussi proche que possible de celle d'un canal radiculaire de la dent réelle.

Ce modèle numérique conduisant à la réalisation de la réplique de dent 1 représente ainsi un canal radiculaire CR comportant une constriction apicale CA avant de déboucher sous la forme d'un foramen apical FA au niveau de l'apex AR de la dent.

En référence à la figure 2, la constriction apicale CA présente une largeur de 0,2 mm (moins 0.1mm et plus 0.2 mm), tandis que le foramen apical FA a une largeur de 0,6 mm (plus ou moins 0.2 mm) et une hauteur de 0,6 mm (plus ou moins 0.2 mm). La hauteur HD du dôme apical est de 0,5 mm. Ces données dimensionnelles, qui présentent de faibles dispersions, sont sensiblement invariantes dans l'espèce humaine.

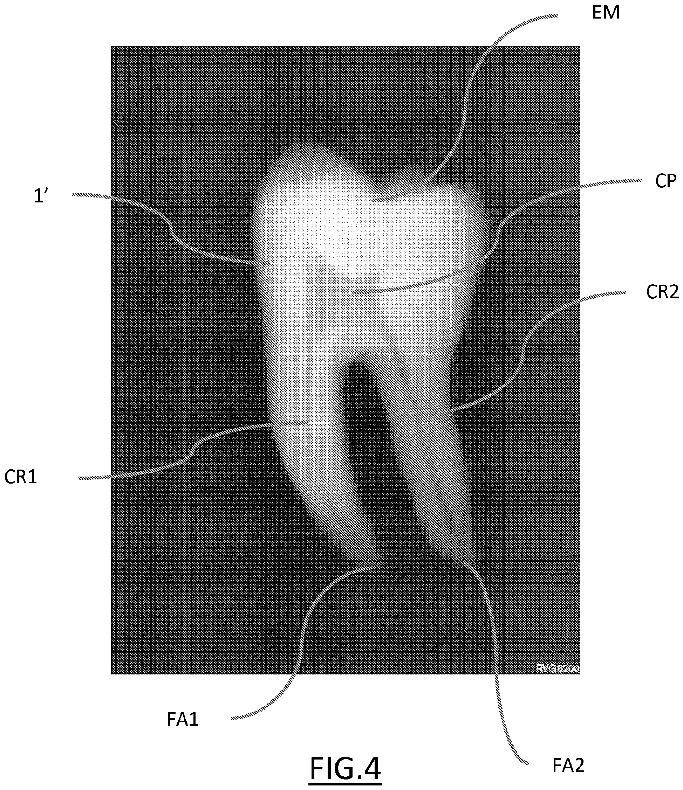

La morphologie du canal de la réplique de dent ainsi conçue et fabriquée qui est biomimétique est bien plus réaliste que celle observée dans les dents répliques actuellement disponibles qui comportent des canaux de diamètre constant jusqu'à leur débouché au niveau de l'apex et qui ne simulent donc pas l'existence d'une constriction apicale et d'un foramen apical. Par ailleurs, comme l'illustre la figure 4, les canaux radiculaires biomimétiques des répliques de dent réalisées avec le procédé de fabrication selon l'invention n'ont comme unique débouché vers l'extérieur que les foramen apicaux.

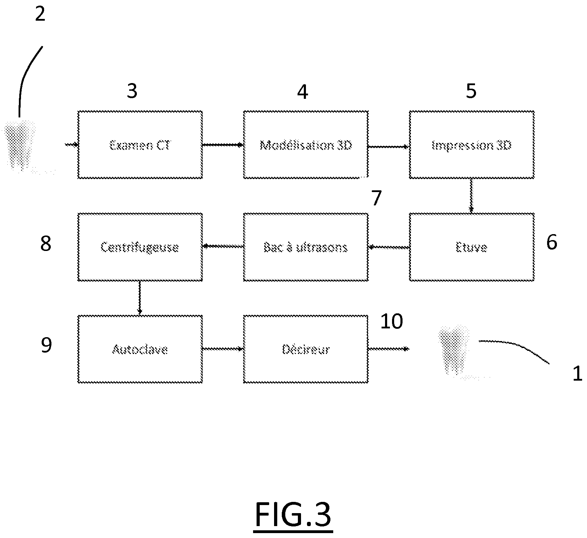

On va maintenant décrire, en référence à la figure 3, des étapes du procédé de fabrication d'une réplique de dent selon l'invention.

Une dent réelle 2 fait initialement l'objet (étape 3) d'une opération de tomographie CT (pour « *computerized tomography* ») qui produit des données numériques d'imagerie 3D.

Ces données numériques 3D sont ensuite traitées (étape 4) par un outil de traitement d'image de façon à générer un modèle numérique D1 incluant une modélisation physico-réaliste d'un ou plusieurs canaux radiculaires.

Ce modèle numérique est alors stocké dans une base de données contenant une bibliothèque de modèles numériques représentant une variété de dents réelles, saines ou dégradées.

En réponse à une sélection effectuée par un utilisateur du procédé de fabrication selon l'invention, d'une réplique d'une dent, une unité d'impression 3D (étape 5) exploite ce modèle numérique pour réaliser, à partir d'une résine méthacrylate et d'une cire, une réplique de cette dent, qui comporte un ou plusieurs canaux radiculaires présentant une morphologie biomimétique.

La réplique de dent ainsi imprimée est ensuite disposée (étape 6) dans une étuve portée à une température d'environ 65 °C pendant une durée d'environ une heure, de façon à éliminer la cire contenue dans le ou les canaux.

La réplique de dent est ensuite (étape 7) disposée dans un bac à ultrasons contenant de l'huile de maïs, à une température de 80°C pendant une heure. Elle est alors placée, apex vers l'extérieur, (étape 8) dans une centrifugeuse avec une vitesse de rotation de 4000 tr/mn, à une température de 65°C pendant 5 minutes. Pour obtenir une extraction fine de la cire, on place ensuite (étape 9) la réplique de dent dans un autoclave.

Enfin, afin d'obtenir un parfait état de surface extérieure de la réplique de dent, on utilise un agent décireur (étape 10) qui ne cause pas de dégradation de la résine méthacrylate. On obtient alors une réplique de dent 1 prête à l'emploi.

Dans le cadre du procédé de fabrication selon l'invention, on peut délivrer soit des répliques de dent dont les canaux sont vides, soit des répliques de dent dans lesquels la pulpe dentaire est simulée sous la forme d'un mélange d'huile et de cire.

Dans ce cas, on ne réalise pas la phase d'élimination précédemment décrite, et on prévoir une étape au cours de laquelle de l'huile est alors injectée dans le canal de la réplique de dent.

Bien sûr, l'invention n'est pas limitée aux exemples qui viennent d'être décrits et de nombreux aménagements peuvent être apportés à ces exemples sans sortir du cadre de l'invention. Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé pour fabriquer une réplique (1) d'une dent (2), comprenant une impression 3D (5) de ladite réplique (1) à partir d'un modèle numérique 3D (4) de ladite dent issu de données numériques d'imagerie de ladite dent (2), un traitement desdites données numériques de façon à obtenir une modélisation numérique physico-réaliste d'un ou plusieurs canaux radiculaires présents dans ladite dent (2), de sorte que la réplique (1) de ladite dent (2) obtenue par ladite impression 3D inclut un ou plusieurs canaux radiculaires biomimétiques (CR),
**caractérisé en ce que** la modélisation numérique physico-réaliste inclut une modélisation d'une constriction apicale (CA) et d'un foramen apical (FA) d'un canal réel en ouverture d'un apex (AR) de la dent,
et **en ce que** ledit ou lesdits canaux radiculaires biomimétiques (CR) ainsi obtenus par impression 3D comportent chacun un unique débouché extérieur via une réplique dudit ou desdits foramens apicaux (FA) de sorte que lesdits canaux radiculaires ne sont accessibles qu'après fraisage de la partie supérieure de la réplique de dent.

2. Procédé de fabrication selon la revendication 1, dans lequel l'impression 3D utilise une résine et une cire support **caractérisé en ce qu'**il comprend en outre, à l'issue de l'impression 3D (5) de la réplique de dent (40), une phase (6-10) d'élimination de la cire dans ladite réplique de dent via le ou les foramens apicaux (FA).

3. Procédé de fabrication selon la revendication 2, **caractérisé en ce que** la phase d'élimination comprend une étape (6) de passage de la réplique de dent (1) une étuve à une température prédéterminée pendant une durée prédéterminée.

4. Procédé de fabrication selon la revendication 3, **caractérisé en ce que** la phase d'élimination comprend en outre une étape (7) de passage de la réplique de dent (1) dans un bac à ultrasons à une température prédéterminée pendant une durée prédéterminée.

5. Procédé de fabrication selon la revendication 4, **caractérisé en ce que** la réplique de dent (1) est plongée dans de l'huile de maïs contenue dans le bac à ultrasons.

6. Procédé de fabrication selon l'une des revendications 4 ou 5, **caractérisé en ce que** la phase d'élimination comprend en outre une étape (8) pour placer la réplique de dent (1) dans une centrifugeuse dans des conditions de température, vitesse de rotation et durée prédéterminées, de façon à extraire la cire hors du ou des canaux radiculaires biomimétiques via le ou les répliques des foramen apicaux.

7. Procédé de fabrication selon la revendication 6, **caractérisé en ce que** la phase d'élimination comprend en outre une étape (9) pour placer la réplique de dent (1) dans un autoclave pendant une durée prédéterminée.

8. Procédé de fabrication selon l'une des revendications 6 ou 7, **caractérisé en ce que** la phase d'élimination comprend en outre une étape (10) pour appliquer sur la surface de la réplique de dent un agent décireur.

9. Procédé de fabrication selon l'une quelconque des revendications 2 à 4, mis en **caractérisé en ce qu'**il comprend en outre, à l'issue de l'étape d'élimination de la cire, une étape (35) pour injecter de l'huile à partir d'une ouverture d'un apex de la dent (40).

10. Système pour fabriquer une réplique (1) d'une dent (2), comprenant des moyens de tomographique (CT) pour numériser une dent réelle (2), des moyens (4) pour générer une modélisation 3D de ladite dent numérisée, et des moyens d'impression 3D (5) de ladite réplique (1) mettant en oeuvre une résine et une cire support de ladite réplique (1), des moyens pour traiter lesdites données numériques de façon à obtenir une modélisation numérique physico-réaliste de canaux dentaires présents dans ladite dent, de sorte que ladite réplique de dent (1) issu de l'impression 3D inclut des canaux radiculaires biomimétiques, ce système mettant en oeuvre le procédé selon l'une quelconque des revendications précédentes,
**caractérisé en ce que** les moyens de traitement numérique (31) sont agencés pour modéliser une constriction apicale (CA) d'un canal réel et un foramen apical (FA) d'un canal radiculaire (CR) en ouverture d'un apex (AR)de la dent (2), et **en ce que** ledit ou lesdits canaux radiculaires biomimétiques obtenus par impression 3D comportent chacun un unique débouché extérieur via une réplique dudit ou desdits foramens apicaux, de sorte que lesdits canaux radiculaires ne .sont accessibles qu'après fraisage de la partie supérieure de la réplique de dent.

11. Système de fabrication selon la revendication 10, **caractérisé en ce qu'**il comprend en outre des moyens pour éliminer la cire de ladite réplique de dent (1).

12. Système de fabrication selon la revendication 11, **caractérisé en ce que** les moyens d'élimination comprennent une étuve.

13. Système de fabrication selon l'une des revendications 11 ou 12, **caractérisé en ce que** les moyens d'élimination comprennent un bac à ultrasons.

14. Système de fabrication selon l'une quelconque des revendications 11 à 13, **caractérisé en ce que** les moyens d'élimination comprennent une centrifugeuse, de façon à extraire la cire hors du ou des canaux radiculaires biomimétiques via le ou les répliques des foramen apicaux.

15. Système de fabrication selon l'une quelconque des revendications 11 à 14, **caractérisé en ce que** les moyens d'élimination comprennent un autoclave agencé pour traiter des instruments dentaires sous sachets.

## Patentansprüche

1. Verfahren zum Herstellen einer Nachbildung (1) eines Zahns (2), umfassend einen 3D-Druck (5) der Nachbildung (1), von einem digitalen 3D-Modell (4) des Zahns, das aus digitalen Bilddaten des Zahns (2) hervorgeht, eine Verarbeitung der digitalen Daten, um eine physikalisch-realistische digitale Modellierung eines oder mehrerer Wurzelkanäle zu erhalten, die in dem Zahn (2) vorhanden sind, sodass die durch den 3D-Druck erhaltene Nachbildung (1) des Zahns (2) einen oder mehrere biomimetische Wurzelkanäle (CR) einschließt,
**dadurch gekennzeichnet, dass** die physikalisch-realistische digitale Modellierung eine Modellierung einer apikalen Konstriktion (CA) und eines Foramen apicale (FA) eines realen Kanals an der Öffnung einer Spitze (AR) des Zahns einschließt,
und **dass** der oder die so durch 3D-Druck erhaltenen biomimetischen Wurzelkanäle (CR) jeweils eine einzige äußere Mündung über eine Nachbildung des oder der Foramina apicale (FA) aufweisen, sodass die Wurzelkanäle erst nach einem Fräsen des oberen Teils der Zahnnachbildung zugänglich sind.

2. Herstellungsverfahren nach Anspruch 1, wobei der 3D-Druck ein Harz und ein Trägerwachs verwendet, **dadurch gekennzeichnet, dass** es ferner am Schluss des 3D-Drucks (5) der Zahnnachbildung (40) eine Phase (6-10) eines Entfernens des Wachses in der Zahnnachbildung über das oder die Foramina apicale (FA) umfasst.

3. Herstellungsverfahren nach Anspruch 2,
**dadurch gekennzeichnet, dass** die Entfernungsphase einen Schritt (6), bei dem die Zahnnachbildung (1) während einer vorbestimmten Dauer bei einer vorbestimmten Temperatur einen Trockenschrank durchläuft, umfasst.

4. Herstellungsverfahren nach Anspruch 3,
**dadurch gekennzeichnet, dass** die Entfernungsphase ferner einen Schritt (7), bei dem die Zahnnachbildung (1) während einer vorbestimmten Dauer bei einer vorbestimmten Temperatur eine Ultraschallwanne durchläuft, umfasst.

5. Herstellungsverfahren nach Anspruch 4, **dadurch gekennzeichnet, dass** die Zahnnachbildung (1) in Maisöl getaucht wird, das in der Ultraschallwanne enthalten ist.

6. Herstellungsverfahren nach einem der Ansprüche 4 oder 5,
**dadurch gekennzeichnet, dass** die Entfernungsphase ferner einen Schritt (8) zum Platzieren der Zahnnachbildung (1) in eine Zentrifuge unter vorbestimmten Temperatur-, Drehzahl- und Dauerbedingungen, um das Wachs aus dem oder den biomimetischen Wurzelkanälen über die eine oder die mehreren Foramina-apicale-Nachbildungen zu extrahieren, umfasst.

7. Herstellungsverfahren nach Anspruch 6, **dadurch gekennzeichnet, dass** die Entfernungsphase ferner einen Schritt (9) zum Platzieren der Zahnnachbildung (1) in einen Autoklaven während einer vorbestimmten Dauer umfasst.

8. Herstellungsverfahren nach einem der Ansprüche 6 oder 7,
**dadurch gekennzeichnet, dass** die Entfernungsphase ferner einen Schritt (10) zum Aufbringen eines Wachsentfernungsmittels auf die Oberfläche der Zahnnachbildung umfasst.

9. Herstellungsverfahren nach einem der Ansprüche 2 bis 4,
**dadurch gekennzeichnet, dass** es am Schluss des Schritts des Entfernens des Wachses ferner einen Schritt (35) zum Einspritzen von Öl von einer Öffnung einer Spitze des Zahns (40) umfasst.

10. System zum Herstellen einer Nachbildung (1) eines Zahns (2), umfassend tomographische Mittel (CT) zum Digitalisieren eines realen Zahns (2), Mittel (4) zum Erzeugen eines 3D-Modells des digitalisierten Zahns, und Mittel zum 3D-Drucken (5) der Nachbildung (1) bei Einsatz eines Harzes und eines Trägerwachses an der Nachbildung (1), Mittel zum Verarbeiten der digitalen Daten, um ein physikalischrealistisches digitales Modell der in dem Zahn vorhandenen Zahnkanäle zu erhalten, sodass die aus dem 3D-Druck hervorgegangene Zahnnachbildung (1) biomimetische Wurzelkanäle einschließt, wobei dieses System das Verfahren nach einem der vorstehenden Ansprüche einsetzt,
**dadurch gekennzeichnet, dass** die Mittel zur digitalen Verarbeitung (31) angeordnet sind, um eine apikale Konstriktion (CA) eines realen Kanals und ein Foramen apicale (FA) eines Wurzelkanals (CR) bei Öffnung einer Spitze (AR) des Zahns (2) zu modellieren, und **dass** der oder die durch 3D-Druck erhaltenen biomimetischen Wurzelkanäle jeweils eine einzige äußere Mündung über eine Nachbildung des oder der Foramina apicale aufweisen, sodass die Wurzelkanäle erst nach dem Fräsen des oberen Teils der Zahnnachbildung zugänglich sind.

11. Herstellungssystem nach Anspruch 10, **dadurch gekennzeichnet, dass** es ferner Mittel zum Entfernen des Wachses von der Zahnnachbildung (1) umfasst.

12. Herstellungssystem nach Anspruch 11, **dadurch gekennzeichnet, dass** die Entfernungsmittel einen Trockenschrank umfassen.

13. Herstellungssystem nach einem der Ansprüche 11 oder 12,
**dadurch gekennzeichnet, dass** die Entfernungsmittel eine Ultraschallwanne umfassen.

14. Herstellungssystem nach einem der Ansprüche 11 bis 13,
**dadurch gekennzeichnet, dass** die Entfernungsmittel eine Zentrifuge umfassen, um das Wachs aus dem oder den biomimetischen Wurzelkanälen über die eine oder die mehreren Nachbildungen der Foramina apicale zu extrahieren.

15. Herstellungssystem nach einem der Ansprüche 11 bis 14,
**dadurch gekennzeichnet, dass** die Entfernungsmittel einen Autoklaven zum Behandeln von in Beuteln verpackten zahnärztlichen Instrumenten umfassen.

## Claims

1. Method for producing a replica (1) of a tooth (2), comprising 3D printing (5) said replica (1) from a 3D digital model (4) of said tooth from digital imaging data of said tooth (2), processing said digital data so as to obtain a physical-realistic digital modeling of one or more root canals present in said tooth (2), such that the replica (1) of said tooth (2) obtained by said 3D printing includes one or more biomimetic root canals (CR),
**characterized in that** the physical-realistic digital modeling includes a modeling of an apical constriction (CA) and of an apical foramen (FA) of a real canal at the opening of an apex (AR) of the tooth,
and **in that** said biomimetic root canals (CR) thus obtained by 3D printing each comprise a single exterior outlet via a replica of said apical foramen (FA) such that said root canals are accessible only after milling the upper portion of the tooth replica.

2. Production method according to claim 1, wherein the 3D printing uses a resin and a support wax **characterized in that** it further comprises, after 3D printing (5) of the tooth replica (40), a phase (6-10) of removing the wax in said tooth replica via the apical foramen (FA).

3. Production method according to claim 2, **characterized in that** the removal phase comprises a step (6) of passing the tooth replica (1) an oven at a predetermined temperature for a predetermined duration.

4. Production method according to claim 3, **characterized in that** the removal phase further comprises a step (7) of passing the tooth replica (1) into an ultrasonic tank at a predetermined temperature for a predetermined duration.

5. Production method according to claim 4, **characterized in that** the tooth replica (1) is immersed in corn oil contained in the ultrasonic tank.

6. Production method according to one of claims 4 or 5,
**characterized in that** the removal phase further comprises a step (8) of placing the tooth replica (1) in a centrifuge under predetermined temperature, rotational speed and duration conditions, so as to extract the wax out of the biomimetic root canals via the replicas of the apical foramen.

7. Production method according to claim 6, **characterized in that** the removal phase further comprises a step (9) of placing the tooth replica (1) in an autoclave for a predetermined duration.

8. Production method according to one of claims 6 or 7,
**characterized in that** the removal phase further comprises a step (10) of applying a wax remover to the surface of the tooth replica.

9. Production method according to any of claims 2 to 4, placed in **characterized in that** it further comprises, at the end of the wax removal step, a step (35) of injecting oil from an opening of an apex of the tooth (40).

10. System for producing a replica (1) of a tooth (2), comprising tomographic means (CT) for digitizing a real tooth (2), means (4) for generating a 3D modeling of said digitized tooth, and means (5) for 3D printing said replica (1) implementing a resin and a wax support of said replica (1), means for processing said digital data so as to obtain a physical-realistic digital modeling of dental canals present in said tooth, such that said tooth replica (1) from the 3D printing includes biomimetic root canals, this system implementing the method according to any of the preceding claims,
**characterized in that** the digital processing means (31) are arranged to model an apical constriction (CA) of a real canal and an apical foramen (FA) of a root canal (CR) at an opening of an apex (AR) of the tooth (2), and **in that** said biomimetic root canals obtained by 3D printing each comprise a single exterior outlet via a replica of said apical foramen, such that said root canals are accessible only after milling the upper portion of the tooth replica.

11. Production system according to claim 10, **characterized in that** it further comprises means for removing the wax from said tooth replica (1).

12. Production system according to claim 11, **characterized in that** the removal means comprise an oven.

13. Production system according to one of claims 11 or 12, **characterized in that** the removal means comprise an ultrasonic tank.

14. Production system according to any of claims 11 to 13, **characterized in that** the removal means comprise a centrifuge, such as to extract the wax from the biomimetic root canals via the replicas of the apical foramen.

15. Production system according to any of claims 11 to 14, **characterized in that** the removal means comprise an autoclave arranged to process dental instruments in bags.
